# EUROPÄISCHE PATENTSCHRIFT

(11) **EP 2 305 748 B1**
(45) Veröffentlichungstag und Bekanntmachung des Hinweises auf die Patenterteilung: **13.02.2013**
(21) Anmeldenummer: 10009878.9
(22) Anmeldetag: 18.09.2010
(51) Int. Cl.: C08K 5/10, C08K 5/50, C08L 69/00

(54) **Polycarbonat-Zusammensetzung mit verbesserter Schmelzefliessfähigkeit**
Polycarbonate compound having improved melt flow behaviour
Composition de polycarbonate ayant une fluidité de fusion améliorée

(30) Priorität: 30.09.2009 DE 102009043512
(43) Veröffentlichungstag der Anmeldung: 06.04.2011
(73) Patentinhaber: Bayer MaterialScience AG, 51368 Leverkusen (DE)
(72) Erfinder: Konrad, Stephan, Dr., 41541 Dormagen (DE); Wehrmann, Rolf, Dr., 47800 Krefeld (DE); Heuer, Helmut-Werner, Dr., 47829 Krefeld (DE); Köhler, Karl-Heinz, Dr., 52078 Aachen-Brand (DE); Buts, Marc, 2570 Duffel (DE)
(74) Vertreter: BIP Patents

(56) Entgegenhaltungen:
- EP-A2- 0 922 728
- DE-A1- 19 925 125
- US-A- 4 670 479
- US-A1- 2003 158 300

## Beschreibung

Die Erfindung betrifft eine Polycarbonat-Zusammensetzung mit verbesserter Schmelzefließfähigkeit bei gleichzeitig guten optischen Eigenschaften und gleichzeitig guter Hydrolysestabilität.

Die Herstellung von Polycarbonat-Spritzgussteilen erfordert insbesondere bei dünnwandigen Formteilen eine ausreichend hohe Schmelzefließfähigkeit für einen einwandfreien Ablauf des Spritzgießvorgangs. Solche Formteile sind je nach Einsatzgebiet den unterschiedlichsten Umgebungsbedingungen ausgesetzt und müssen dabei eine Vielzahl von Anforderungen einwandfrei erfüllen. Das bedeutet, dass neben den Verarbeitungseigenschaften insbesondere die klassischen guten optischen Eigenschaften des Polycarbonats gewährleistet sein müssen. Darüber hinaus dürfen sich diese guten Eigenschaften unter dem relativ häufig auftretenden Einfluss von Feuchtigkeit auch bei höherer Temperatur nicht verändern.

Polycarbonat, das nach dem sogenannten Schmelzumesterungsverfahren, auch Schmelzeverfahren genannt, aus organischen Carbonaten, wie z.B. Diarylcarbonaten, und Bisphenolen ohne Verwendung zusätzlicher Lösungsmittel in der Schmelze hergestellt wird, gewinnt zunehmend an wirtschaftlicher Bedeutung und ist daher für viele Einsatzgebiete ein geeignetes Material.

Die Herstellung aromatischer Polycarbonate nach dem Schmelzumesterungsverfahren ist bekannt und beispielsweise beschrieben in "Schnell", Chemistry and Physics of Polycarbonats, Polymer Reviews, Vol. 9, Interscience Publishers, New York, London, Sydney 1964, in D.C. Prevorsek, B.T. Debona and Y. Kersten, Corporate Research Center, Allied Chemical Corporation, Moristown, New Jersey 07960, "Synthesis of Poly(ester)carbonate Copolymers" in Journal of Polymer Science, Polymer Chemistry Edition, Vol. 19, 75-90 (1980), in D. Freitag, U. Grigo, P.R. Müller, N. Nouvertne, BAYER AG, "Polycarbonates" in Encyclopedia of Polymere Science and Engineering, Vol. 11, Second Edition, 1988, Seiten 648-718 und schließlich in Des. U. Grigo, K. Kircher und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 .

Schmelzepolycarbonate, die organische Phosphorverbindungen wie z. B. Phosphine, Phosphinoxide, Phosphinite, Phosphonite, Phosphite, Diphosphine, Diphosphinite, Diphosphonite, Diphosphite, Phosphinate, Phosphonate, Phosphate, Diphosphinate, Diphosphonate und Diphosphatverbindungen enthalten, sind beispielsweise in EP-A-1 412 412 sowie in JP-08-225736 und JP-11-100497 beschrieben. In EP-A-1 412 412 werden die verbesserten Hydrolysebeständigkeiten derart modifizierter Schmelzepolycarbonate erwähnt. Jedoch enthalten die Offenbarungen keine Hinweise auf eine Verbesserung rheologischer oder optischer Eigenschaften eines Polycarbonats.

Auch Schmelzepolycarbonate, die aliphatische Fettsäureester enthalten sind zahlreich in der Literatur bekannt, so z.B. aus der US-A-2004225047 oder aus der EP-A-561 638, in denen die verbesserte Entformbarkeit und Oberflächenqualität von Spritzgussteilen aus derartigen Polycarbonat-Formmassen dargestellt wird. Hinweise auf eine Verbesserung rheologischer oder optischer Eigenschaften der Polycarbonat-Formmassen sind aus dieser Offenbarung nicht zu entnehmen.

JP 02-219855 beschreibt Polycarbonat-Formmassen, die Trialkylphosphate und Ester gesättigter Fettsäuren enthalten, aber keine Kombinationen mit weiteren Phosphorverbindungen. Es gibt weder Hinweise auf die Hydrolysebeständigkeit, noch auf rheologische Eigenschaften. Auch ist nicht ersichtlich, ob sich die dort genannten Eigenschaftsverbesserungen auch auf Schmelzepolycarbonate beziehen.

EP 561629 enthält Beispiele zu Schmelzepolycarbonat-Formmassen, die Phosphit und aliphatische Fettsäureester enthalten, und die ein verbessertes Entformungsverhalten aufweisen. Jedoch gibt die Offenbarung keine Hinweise auf rheologische Eigenschaften oder die Hydrolysebeständigkeit. Vergleichsversuche zeigen allerdings, dass derartige Formmassen, die Phosphit und aliphatische Fettsäureester enthalten, eine deutlich verschlechterte Hydrolysebeständigkeit aufweisen, die negative optische und mechanische Veränderungen der daraus hergestellten Formkörper zur Folge hat.

Aufgabe der Erfindung war es daher, Formmassen aus einem Schmelzepolycarbonat herzustellen, das verbesserte Verarbeitungseigenschaften hinsichtlich Schmelzefließfähigkeit bei gleichzeitig guter Hydrolysestabilität und guten optischen Eigenschaften aufweist.

Überraschenderweise wurde nun gefunden, dass Schmelzepolycarbonate, die eine erfindungsgemäße Kombination bestimmter organischer Phosphor-Verbindungen und aliphatische Carbonsäureester enthalten, die obigen Eigenschaftsanforderungen hervorragend erfüllen.

Um Nachteile des Standes der Technik zu überwinden, wurde die erfinderische Aufgabe durch Herstellung von Schmelzepolycarbonat-Formmassen gelöst, die als Phosphor-Verbindungen eine Mischung aus speziellen Phosphinen, insbesondere Triarylphosphinen und gegebenenfalls Alkylphosphaten enthalten und aliphatische Carbonsäureester. Die in den Formmassen enthaltenen aliphatischen Carbonsäureester sind Ester aliphatischer langkettiger Carbonsäuren mit ein- oder mehrwertigen aliphatischen und/oder aromatischen Hydroxyverbindungen. Diese erfindungsgemäßen Formmassen zeichnen sich durch eine verbesserte Schmelzefließfähigkeit bei gleichzeitig guten optischen Eigenschaften und bei guter Hydrolysestabilität aus.

Gegenstand der Erfindung ist daher eine Polycarbonat-Zusammensetzung aus einem sogenannten Schmelzepolycarbonat, hergestellt aus Kohlensäurediarylester und Bisphenolen in der Schmelze, das spezielle Phosphine, insbesondere Triarylphosphine, Alkylphosphate und aliphatische Carbonsäureester enthält.

Erfindungsgemäß verwendete Phosphine sind Verbindungen der allgemeinen Formel (I): 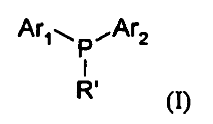
wobei Ar₁ und Ar₂ gleiche oder unterschiedliche unsubstituierte oder substituierte Arylreste sind und
R' ein unsubstituierter oder substituierter Arylrest oder einer der folgenden Reste (Ia) bis (Ih) ist 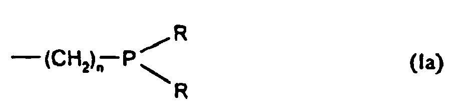 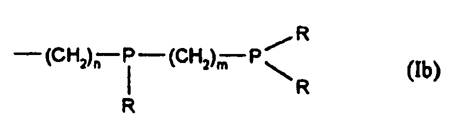 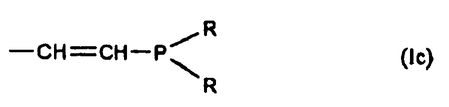 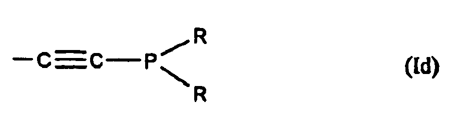 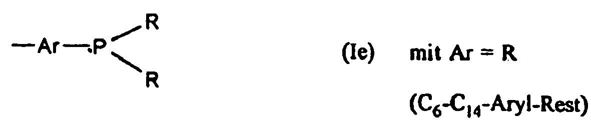 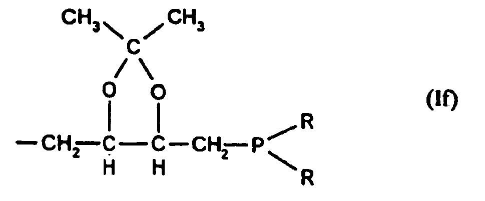 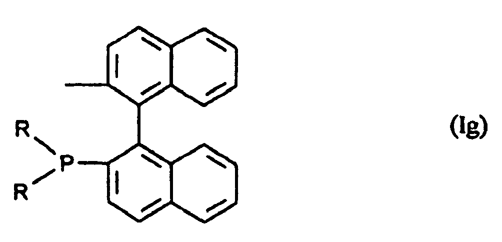 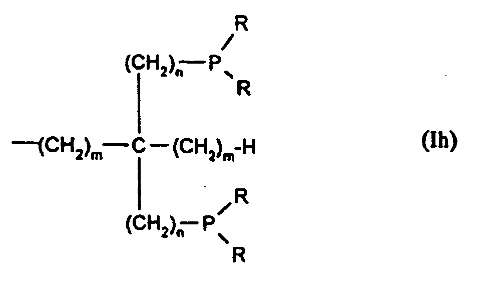
in denen R ein unsubstituierter oder substituierter C₆-C₁₄-Aryl-Rest ist und, "n" und "m" jeweils unabhängig voneinander eine ganze Zahl von 1 bis 7 sind und wobei die H-Atome der Reste (Ia) bis (Ic) noch durch Substituenten ersetzt sein können und wobei
R' noch 4-Phenyl-phenyl oder a-Naphthyl sein kann, wenn beide Ar's in Formel (I) jeweils ebenfalls 4-Phenyl-phenyl oder α -Naphthyl sind. Hierbei können die 4-Phenyl-phenyl- und die a-Naphthyl-Reste noch Substituenten tragen.

Bevorzugte Reste Ar in (I) sind Phenyl, 4-Phenyl-phenyl und Naphthyl.

Geeignete Substituenten der Arylreste Ar in (I) sind F, CH₃, CI, Br, J, OCH₃, CN, OH, Alkylcarboxy, Phenyl, Cycloalkyl, Alkyl.

Geeignete Substituenten für die H-Atome der Reste (Ia) bis (Ic) sind F, CH₃, Alkyl, Cycloalkyl, CI, Aryl.

Bevorzugte Zahlen "n" und "m" sind 1, 2, 3 oder 4.

Aryl steht jeweils unabhängig für einen aromatischen Rest mit 4 bis 24 Gerüstkohlenstoffatomen, in denen keines, ein, zwei oder drei Gerüstkohlenstoffatome pro Zyklus (aromatischer Ring aus C-Atomen), im gesamten Molekül mindestens jedoch ein Gerüstkohlenstoffatom, durch Heteroatome, ausgewählt aus der Gruppe Stickstoff, Schwefel oder Sauerstoff, substituiert sein können. Vorzugsweise bedeutet Aryl jedoch einen carbozyklischen aromatischen Rest mit 6 bis 24 Gerüstkohlenstoffatomen. Gleiches gilt für den aromatischen Teil eines Arylalkyl-Restes sowie für Arylbestandteile komplexerer Gruppen (wie z.B. Aryl-carbonyl- oder Aryl-sulfonyl-Reste).

Beispiele für C₆-C₂₄-Aryl sind Phenyl, o-, p-, m-Tolyl, Naphthyl, Phenanthrenyl, Anthracenyl oder Fluorenyl, Beispiele für heteroaromatisches C₄-C₂₄-Aryl in denen keines, ein, zwei oder drei Gerüstkohlenstoffatome pro Zyklus, im gesamten Molekül mindestens jedoch ein Gerüstkohlenstoffatom, durch Heteroatome, ausgewählt aus der Gruppe Stickstoff, Schwefel oder Sauerstoff, substituiert sein können, sind beispielsweise Pyridyl, Pyridyl-N-Oxid, Pyrimidyl, Pyridazinyl, Pyrazinyl, Thienyl, Furyl, Pyrrolyl, Pyrazolyl, Imidazolyl, Thiazolyl, Oxazolyl oder Isoxazolyl, Indolizinyl, Indolyl, Benzo[b]thienyl, Benzo[b]furyl, Indazolyl, Chinolyl, Isochinolyl, Naphthyridinyl, Chinazolinyl, Benzofuranyl oder Dibenzofuranyl.

Erfindungsgemäß geeignete Phosphine sind z.B. Triphenylphosphin, Tritolylphosphin, Tri-p-tert.-butylphenylphosphin oder deren Oxide. Bevorzugt wird als Phosphin Triphenylphosphin eingesetzt.

Beispiele für die erfindungsgemäß einzusetzenden Diarylphosphine sind 1,2-Bis-(di-pentafluorphenyl-phosphino)-ethan, Bis-(diphenyl-phosphino)-acetylen, 1,2-Bis-(diphenylphosphino)-benzol,

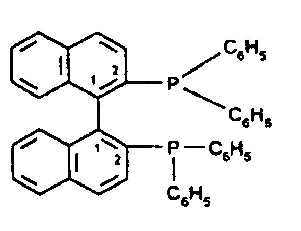

[2,2'-Bis-(diphenylphosphino)-1,1'-binaphthyl], 2,3-Bis-(diphenylphosphino)-butan, 1,4-Bis-(diphenylphosphino)-butan, 1,2-Bis-(diphenylphosphino)-ethan, cis-1,2-Bis-(diphenylphosphino)-ethylen.

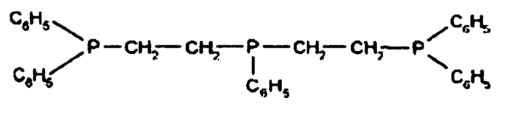

[Bis-(2-(diphenylphosphino)-ethyl)-phenylphosphin], Bis-(diphenylphosphino)-methan, 2,4-Bis-(diphenylphosphino)-pentan, 1,3-Bis-(diphenylphosphino)-propan, 1,2-Bis-(diphenylphosphino)-propan,

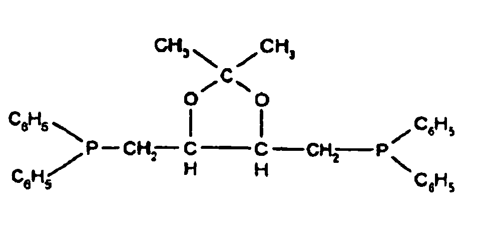

[4,5-O-lsopropyliden-2,3-dihydroxy-1,4-bis-(diphenylphosphino)-butan], Tri-(4-diphenyl)-phosphin und Tris-(a-naphthyl)-phosphin.

Die Diarylphosphine können nach den folgenden Literaturhinweisen hergestellt werden:
Issleib et al., Chem. Ber., 92 (1959), 3175 - 3182 und Hartmann et al., Zeitschr. Anorg. Ch. 287 (1956) 261 - 272.

Es können auch Mischungen aus verschiedenen Phosphinen verwendet werden. Die verwendeten Phosphine werden in Mengen von 10 bis 2000 mg/kg, bevorzugt von 30 bis 800 mg/kg, besonders bevorzugt von 50 bis 500 mg/kg bezogen auf das Gesamtgewicht der Zusammensetzung eingesetzt.

Die erfindungsgemäßen Formmassen können neben den eingesetzten Phosphinen bis zu 80 %, bezogen auf das eingesetzte Phosphin, an den entsprechenden Phosphinoxiden enthalten.

Erfindungsgemäß verwendete Alkylphosphate sind Verbindungen der allgemeinen Formel (II): 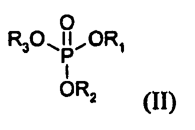 wobei R₁ bis R₃ H, gleiche oder unterschiedliche linerare, verzweigte oder zyklische Alkylreste sein können. Besonders bevorzugt sind C₁-C₁₈ Alkylreste. C₁-C₁₈-Alkyl steht beispielsweise für Methyl, Ethyl, n-Propyl, iso-Propyl, n-Butyl, sec.-Butyl, tert.-Butyl, n-Pentyl, 1-Methylbutyl, 2-Methylbutyl, 3-Methylbutyl, neo-Pentyl, 1-Ethylpropyl, Cyclohexyl, Cyclopentyl, n-Hexyl, 1,1-Dimethylpropyl, 1,2-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-i-methylpropyl, 1-Ethyl-2-methylpropyl oder 1-Ethyl-2-methylpropyl, n-Heptyl und n-Octyl, Pinakyl, Adamantyl, die isomeren Menthyle, n-Nonyl, n-Decyl, n-Dodecyl, n-Tridecyl, n-Tetradecyl, n-Hexadecyl oder n-Octadecyl.

Erfindungsgemäß geeignete Alkylphosphate sind z.B. Mono-, Di- und Trihexylphosphat, Triisoctylphosphat und Trinonylphosphat. Bevorzugt wird als Alkylphosphat Triisooctylphosphat (Tris-2-ethyl-hexyl-phosphat) verwendet. Es können auch Mischungen aus verschiedenen Mono-, Di- und Trialkylphosphaten verwendet werden. Die verwendeten Alkylphosphate werden in Mengen von weniger als 500 mg/kg, bevorzugt von 0,5 bis 500 mg/kg, besonders bevorzugt 2 bis 500 mg/kg, bezogen auf das Gesamtgewicht der Zusammensetzung eingesetzt.

Erfindungsgemäß verwendete aliphatische Carbonsäureester sind Ester aliphatischer langkettiger Carbonsäuren mit ein- oder mehrwertigen aliphatischen und/oder aromatischen Hydroxyverbindungen. Besonders bevorzugt verwendete aliphatische Carbonsäureester sind Verbindungen der allgemeinen Formel (III):

(R₄-CO-O)ₒ-R₅-(OH)ₚ mit o = 1 bis 4 und p = 3 bis 0 (III)

wobei R₄ ein aliphatischer gesättigter oder ungesättigter, linearer, cyclischer oder verzweigter Alkylrest ist und R₅ ein Alkylenrest eines 1- bis 4-wertigen aliphatischen Alkohols R₅-(OH)ₒ₊ₚ ist.

Besonders bevorzugt für R₄ sind C₁-C₁₈ Alkylreste. C₁-C₁₈-Alkyl steht beispielsweise für Methyl, Ethyl, n-Propyl, iso-Propyl, n-Butyl, sec.-Butyl, tert.-Butyl, n-Pentyl, 1-Methylbutyl, 2-Methylbutyl, 3-Methylbutyl, neo-Pentyl, 1-Ethylpropyl, Cyclohexyl, Cyclopentyl, n-Hexyl, 1,1-Dimethylpropyl, 1,2-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-l-methylpropyl, 1-Ethyl-2-methylpropyl oder 1-Ethyl-2-methylpropyl, n-Heptyl und n-Octyl, Pinakyl, Adamantyl, die isomeren Menthyle, n-Nonyl, n-Decyl, n-Dodecyl, n-Tridecyl, n-Tetradecyl, n-Hexadecyl oder n-Octadecyl.

Alkylen steht für einen geradkettigen, zyklischen, verzweigten oder unverzweigten C₁-C₁₈ AlkylenRest. C₁-C₁₈-Alkylen steht beispielsweise für Methylen, Ethylen, n-Propylen, iso-Propylen, n-Butylen, n-Pentylen, n-Hexylen, n-Heptylen, n-Octylen, n-Nonylen, n-Decylen, n-Dodecylen, n-Tridecylen, n-Tetradecylen, n-Hexadecylen oder n-Octadecylen.

Bei Estern von mehrwertigen Alkoholen können auch freie, nicht veresterte OH-Gruppen vorhanden sein. Erfindungsgemäß geeignete aliphatische Carbonsäureester sind z.B.: Glycerinmonostearat, Palmitylpalmitat, und Stearylstearat. Es können auch Gemische verschiedener Carbonsäureester der Formel (III) eingesetzt werden. Bevorzugt verwendete Carbonsäureester sind Ester von Pentaerythrit, Glycerin, Trimethylolpropan, Propandiol, Stearylalkohol, Cetylalkohol oder Myristylalkohol mit Myristin-, Palmitin-, Stearin- oder Montansäure und Gemische daraus. Besonders bevorzugt sind Pentaerythrit-tetrastearat, Glycerinmonostearat, Stearylstearat und Propandioldistearat, bzw. Gemische daraus. Die Carbonsäureester werden in Mengen von 50 bis 8000 mg/kg, bevorzugt von 100 bis 7000 mg/kg bezogen auf das Gesamtgewicht der Zusammensetzung eingesetzt.

Das erfindungsgemäß einzusetzende Polycarbonat wird durch die Schmelzumesterungsreaktion geeigneter Bisphenole und Kohlensäurediarylester in Gegenwart eines geeigneten Katalysators hergestellt. Das Polycarbonat kann auch durch die Kondensation von Carbonatoligomeren, die Hydroxy- und/oder Carbonatendgruppen enthalten, und geeigneten Kohlensäurediarylestern und Bisphenolen hergestellt werden.

Bevorzugte Carbonatoligomere werden durch die Formel (IV) mit Molekulargewichten von 153 bis 15.000 [g/mol] beschrieben. 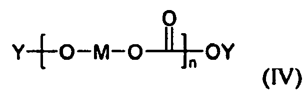 wobei Y = H oder ein unsubstituierter oder substituierter Arylrest ist.

Geeignete Kohlensäurediarylester im Zusammenhang mit der Erfindung sind Di-C₆- bis Di-C₁₄-arylester, vorzugsweise die Diester von Phenol oder von alkyl- oder aryl-substituierten Phenolen, d.h. Diphenylcarbonat, Dikresylcarbonat und Di-4-tert-butylphenylcarbonat. Am meisten bevorzugt ist Diphenylcarbonat.

Zu den geeigneten Di-C₆- bis Di-C₁₄-Arylestern gehören auch unsymmetrische Diarylester, die zwei verschiedene Arylsubstituenten enthalten. Bevorzugt sind Phenylkresylcarbonat und 4-tert-Butylphenylphenylcarbonat.

Zu den geeigneten Diarylestern gehören auch Gemische von mehr als einem Di-C₆ - C₁₄-arylester. Bevorzugte Gemische sind Gemische von Diphenylcarbonat, Dikresylcarbonat und Di-4-tert-butylphenylcarbonat.

Bezogen auf 1 Mol Diphenol, können die Kohlensäurediarylester in Mengen von 1,00 bis 1,30 Mol, besonders bevorzugt in Mengen von 1,02 bis 1,20 Mol und am meisten bevorzugt in Mengen von 1,05 bis 1,15 Mol verwendet werden.

Geeignete Dihydroxyarylverbindungen im Zusammenhang mit der Erfindung sind solche, die der Formel (V) entsprechen: 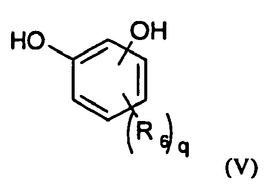 worin
- R₆: ein substituiertes oder unsubstituiertes Phenyl, Methyl, Propyl, Ethyl, Butyl, Cl oder Br ist und q für 0, 1 oder 2 steht.

Bevorzugte Dihydroxybenzolverbindungen sind 1,3-Dihydroxybenzol, 1,4-Dihydroxybenzol und 1,2-Dihydroxybenzol.

Geeignete Dihydroxydiarylverbindungen im Zusammenhang mit der Erfindung sind solche, die der Formel (VI) entsprechen: 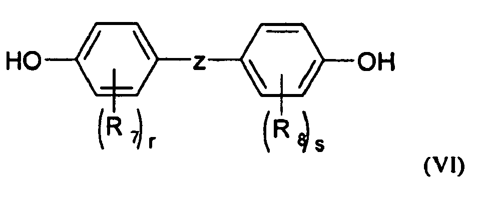 wobei
- Z: C₁ bis C₈-Alkyliden oder C₅ bis C₁₂-Cycloalkyliden, S, SO₂ oder eine Einfachbindung,
- R₇, R₈: unabhängig voneinander ein substituiertes oder unsubstituiertes Phenyl, Methyl, Propyl, Ethyl, Butyl, Cl oder Br ist und
- r, s: unabhängig voneinander für 0, 1 oder 2 steht.

Bevorzugte Diphenole sind 4,4'-Dihydroxydiphenyl, 4,4'-Dihydroxydiphenylsulfid, 1,1-Bis(4-hydroxphenyl)cyclo-hexan, 1,2-Bis(4-hydroxyphenyl)benzol, 1,3-Bis(4-hydroxyphenyl)benzol, 1,4-Bis(4-hydroxyphenyl)benzol, Bis(4-hydroxyphenyl)methan, 2,2-Bis(4-hydroxyphenyl)propan, 2,4-Bis(4-hydroxyphenyl)-2-methylbutan, 2,2-Bis(3-methyl-4-hydroxy-phenyl)-propan, 2,2-Bis(3-chlor-4-hydroxyphenyl)propan, Bis(3,5-dimethyl-4-hydroxy-phenyl)methan, 2,2-Bis(3,5-dimethyl-4-hydroxyphenyl)propan, Bis(3,5-dimethyl-4-hydroxyphenyl)sulfon, Bis(4-hydroxyphenyl)sulfon, 1,2-Bis[2-(4-hydroxyphenyl)isopropyl]benzol, 1,3-Bis[2-(4-hydroxyphenyl)isopropyl]benzol, 1,4-Bis[2-(4hydroxyphenyl)isopropyl]benzol, 1,1-Bis(4-hydroxyphenyl)-1-phenylethan, 2,4-Bis(4-hydroxyphenyl)-2-methylbutan, 2,2-Bis-(3,5-dichlor-4-hydroxyphenyl)-propan, 2,2-Bis(3,5-dibrom-4-hydroxyphenyl)propan, 1,1-Bis(4-hydroxyphenyl)-3,3,5-trimethylcyclohexan.

Die am meisten bevorzugten Diphenole sind l,l-Bis(4-hydroxyphenyl)-1-phenylethan, 2,2-Bis(4-hydroxyphenyl)propan, 4,4'-Dihydroxydiphenyl, 1,1-Bis(4-hydroxyphenyl)-3,3,5-trimethylcyclohexan, 2,2-Bis(3,5-dibrom-4-hydroxyphenyl)propan und 1,3-Bis[2-(4-hydroxyphenyl)isopropyl]benzol.

Zu den geeigneten Diphenolen gehören auch Gemische von mehr als einem Diphenol; dabei würde ein Copolycarbonat entstehen. Die am meisten bevorzugten Mischpartner sind 1,3-Bis[2-(4-hydroxyphenyl)isopropyl]benzol, 1,1-Bis(4-hydroxyphenyl)-3,3,5-trimethylcyclohexan, 2,2-Bis(4-hydroxyphenyl)propan, 4,4'-Dihydroxydiphenyl und 2,2-Bis(3,5-dibrom-4-hydroxyphenyl)propan.

Zusätzlich kann ein Verzweigungsmittel hinzugefügt werden, wie z.B. Verbindungen, die drei funktionelle phenolische OH-Gruppen enthalten. Durch die Verzweigung würde das nicht-Newtonsche Fließverhalten erhöht. Zu den geeigneten Verzweigungsmitteln gehören Phloroglucin, 3,3-Bis(3-methyl-4-hydroxyphenyl)-2-oxo-2,3-dihydroindol, 4,6-Dimethyl-2,4,6-tris(4-hydroxyphenyl)hepten-2, 4,6-Dimethyl-2,4,6-tris(4-hydroxyphenyl)-heptan, 1,3,5-Tris-(4-hydroxyphenyl)-benzol, l,l,l-Tris(4-hydroxyphenyl)ethan, Tris(4-hydroxyphenyl)phenylmethan, 2,2-Bis[4,4-bis(4-hydroxyphenyl)cyclohexyl]propan, 2,4-Bis-(4-hydroxyphenylisopropyl)phenol, 2,6-Bis(2-hydroxy-5'-methylbenzyl)-4-methylphenol, 2-(4-hydroxyphenyl)-2-(2,4-dihydroxyphenyl)propan, Hexakis(4-(4-hydroxyphenylisopropyl)phenyl)orthoterephthalat, Tetrakis(4-hydroxyphenyl)-methan, Tetrakis(4-(4-hydroxyphenylisopropyl)phenoxy)methan, 1,4-Bis((4',4"-dihydroxytriphenyl)methyl)benzol und Isatinbiskresol, Pentaerythrit, 2,4-Dihydroxybenzoesäure, Trimesinsäure, Cyanursäure.

Zur Herstellung der erfindungsgemäßen Polycarbonate geeignete Katalysatoren sind beispielsweise solche der allgemeinen Formel (VII) 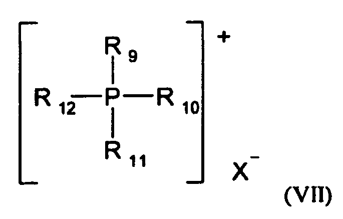 worin
R₉, R₁₀, R₁₁ und R₁₂ unabhängig voneinander die gleichen oder verschiedene C₁- bis C₁₈-Alkylene, C₆ bis C₁₀-Aryle oder C₅ bis C₆-Cycloalkyle bezeichnen können und X- für ein Anion stehen kann, bei dem das entsprechende Säure-Base-Paar H⁺ + X⁻ →. HX ein pK_{b} von < 11 hat.

Bevorzugte Katalysatoren sind Tetraphenylphosphoniumfluorid, Tetraphenylphosphoniumtetraphenylborat und Tetraphenylphosphoniumphenolat. Am meisten bevorzugt ist Tetraphenylphosphoniumphenolat. Bevorzugte Mengen an Phosphoniumsalzkatalysatoren sind beispielsweise 10⁻² bis 10⁻⁸ Mol pro Mol Diphenol und die am meisten bevorzugten Katalysatormengen sind 10⁻⁴ bis 10⁻⁶ Mol pro Mol Diphenol. Es können zudem gegebenenfalls Cokatalysatoren zusätzlich zu dem oder den Phosphoniumsalz(en) verwendet werden, um die Geschwindigkeit der Polymerisation zu erhöhen.

Solche Cokatalysatoren können beispielsweise Salze von Alkalimetallen und Erdalkalimetallen, wie Hydroxide, Alkoxide und Aryloxide von Lithium, Natrium und Kalium, vorzugsweise Hydroxid-, Alkoxid- oder Aryloxidsalze von Natrium sein. Am meisten bevorzugt sind Natriumhydroxid und Natriumphenolat. Die Mengen des Cokatalysators können beispielsweise im Bereich von 1 bis 200 µg/kg, vorzugsweise 5 bis 150 µg/kg und am meisten bevorzugt 10 bis 125 µg/kg jeweils bezogen auf die eingesetzte Masse der Dihydroxydiarylverbindung liegen, jeweils berechnet als Natrium.

Die Polycarbonate können stufenweise hergestellt werden, die Temperaturen können stufenweise im Bereich von 150 bis 400°C durchgeführt werden, die Verweilzeit in jeder Stufe kann 15 Minuten bis 5 Stunden betragen, und die Drücke in jeder Stufe können 1000 bis 0,01 mbar betragen. Besonders bevorzugt nimmt die Temperatur von einer Stufe zur anderen zu und der Druck von einer zur nächsten Stufe ab.

Die bevorzugt verwendeten Schmelzepolycarbonate sind gekennzeichnet durch die allgemeine Formel (IV) 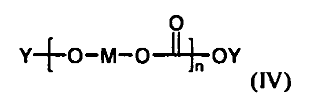 wobei Y = H oder eine Verbindung der Formel (X) 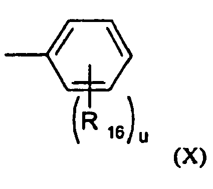 ist, wobei
- R₁₆: gleich oder verschieden H, C₁ bis C₂₀-Alkyl, C₆H₅ oder C(CH₃)₂C₆H₅, und
- u: 0, 1, 2 oder 3 sein kann,
wobei die eckige Klammer sich wiederholende Struktureinheiten bezeichnet, M für Ar oder eine multifunktionelle Verbindung A, B, C sowie Verbindung D steht, wobei Ar eine Verbindung sein kann, die durch Formel (VIII) oder (IX) dargestellt wird, bevorzugt (IX) 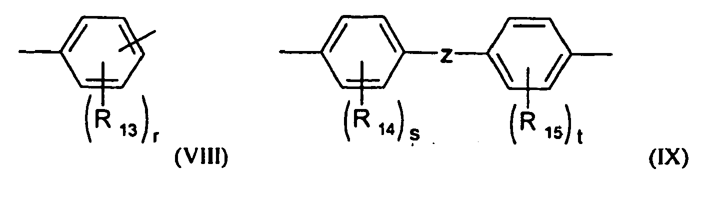 worin
- Z: C₁ bis C₈-Alkyliden oder C₅ bis C₁₂-Cycloalkyliden, S, SO₂ oder eine Einfachbindung ist,
- R₁₃, R₁₄, R₁₅: unabhängig voneinander ein substituiertes oder unsubstituiertes C₁ - C₁₈ Alkylrest ist, bevorzugt ein substituiertes oder unsubstituiertes Phenyl, Methyl, Propyl, Ethyl, Butyl, Cl oder Br ist und
- r, s, t: unabhängig voneinander für 0, 1 oder 2 steht,
wobei die multifunktionelle Verbindung A eine Verbindung der Formel 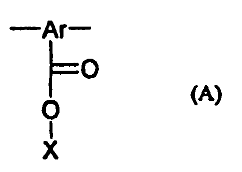 ist, wobei die multifunktionelle Verbindung B eine Verbindung der Formel 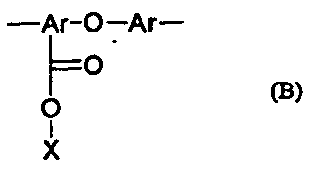 ist, wobei die multifunktionelle Verbindung C eine Verbindung der Formel 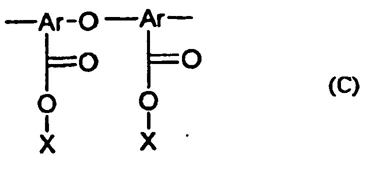 ist, wobei Verbindung D eine Verbindung der Formel 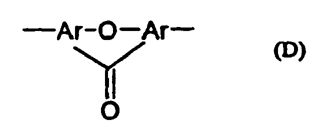 ist, und die Summe von multifunktionellen Verbindungen A, B, C und D ≥ mg/kg ist,
wobei X = Y oder -[MOCOO]ₙ-Y ist, wobei M und Y die oben angegebene Bedeutung haben.

Das erfindungsgemäße eingesetzte Polycarbonat kann ein durch Gelpermeationschromatographie bestimmtes Mittel des Molekulargewichts von 5.000 bis 80.000, vorzugsweise 10.000 bis 60.000 und in am meisten bevorzugter Weise 15.000 bis 40.000 aufweisen.

Vorzugsweise hat Ar die folgende Bedeutung:

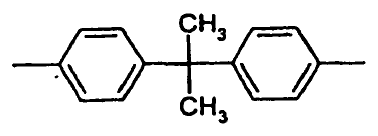

Vorzugsweise ist die multifunktionelle Verbindung A die Verbindung A1:

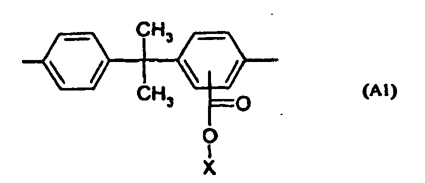

Vorzugsweise ist die Verbindung B die Verbindung B1:

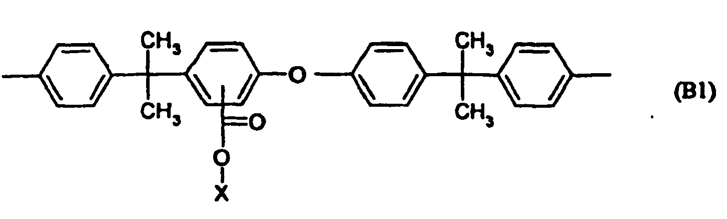

Vorzugsweise ist die multifunktionelle Verbindung C die Verbindung C1:

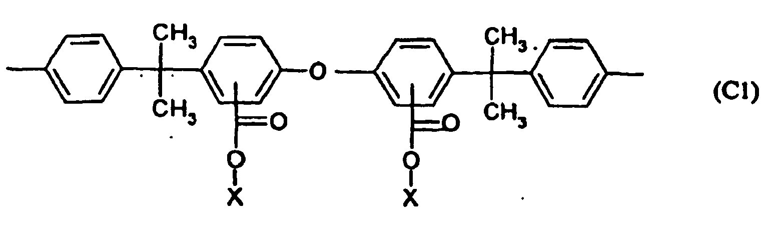

In den Verbindungen A1, B1 und C1 hat X die oben angegebene Bedeutung. Vorzugsweise ist die Verbindung D die Verbindung D1:

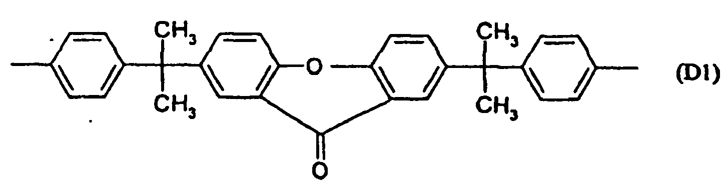

Die zuvor beschriebenen Schmelzepolycarbonate sind nur beispielhaft genannt. Die Anteile der Komponenten A bis D sind in Summe in Mengen ≥ 5 mg/kg im Schmelzepolycarbonat enthalten.

Die erfindungsgemäßen Zusammensetzungen (Schmelzepolycarbonat-Formmassen) können beispielsweise hergestellt werden, indem man die jeweiligen Bestandteile in bekannter Weise vermischt und bei Temperaturen von 200°C bis 400°C in üblichen Aggregaten wie Innenknetem, Extrudern und Doppelwellenschnecken schmelzcompoundiert und schmelzextrudiert. Die Vermischung der einzelnen Bestandteile kann sowohl sukzessive als auch simultan erfolgen und zwar sowohl bei etwa 20°C (Raumtemperatur) als auch bei höherer Temperatur. Die erfindungsgemäß eingesetzten Verbindungen können aber auch separat in unterschiedlichen Stadien des Herstellprozesses in die Schmelzepolycarbonat-Formmasse eingebracht werden. So können z.B. das Alkylphosphat und / oder das Phosphin bereits während oder am Ende der Polykondensation in das Schmelzepolycarbonat eingebracht werden, bevor aliphatische Carbonsäureester hinzugesetzt werden.

Die Zugabeform der erfindungsgemäßen Verbindungen ist nicht limitiert. Die erfindungsgemäßen Verbindungen bzw. Mischungen der erfindungsgemäßen Verbindungen können als Feststoffe, z.B. als Pulver, in Lösung oder als Schmelze der Polymerschmelze zugesetzt werden. Bevorzugt erfolgt die Dosierung der organischen Phosphorverbindungen und der aliphatischen Carbonsäureester über einen Seitenextruder hinter der letzten Polykondensationsstufe. Im großtechnischen Ausführungsformen wird besonders bevorzugt ein Seitenextruder mit einem Durchsatz von beispielsweise 200 - 1000 kg Polycarbonat pro Stunde betrieben.

In einer bevorzugten Ausführungsform erfolgt die optionale Dosierung von Alkylphosphaten beispielsweise bei Raumtemperatur in flüssiger Form gemeinsam mit Polycarbonat in den Trichter der Polycarbonat-Aufgabe des Seitenextruders. Die Menge an Alkylphosphat wird z.B. mit Hilfe einer Membranpumpe oder einer anderen geeigneten Pumpe dosiert. Die Zugabe von Phosphinen erfolgt bevorzugt in flüssiger Form bei einer Temperatur von ca. 80 bis 250°C hinter den Trichter der Polycarbonat-Aufgabe in eine Zone des Extruders, die mit Mischelementen ausgestattet ist. Dabei erfolgt die Entnahme der Phosphine aus einer Ringleitung, die bevorzugt auf einen Druck von 2-20 bar bevorzugt bei einer Temperatur von 80 - 250 °C gehalten wird. Die zugesetzte Menge kann über ein Regelventil gesteuert werden.

Besonders bevorzugt kann hinter dem Seitenextruder eine Zahnradpumpe zur Druckerhöhung installiert werden. Die verwendeten Carbonsäureester können bevorzugt hinter dem Seitenextruder und vor dem statischen Mischer mit einer Membranpumpe oder einer anderen geeigneten Pumpe zudosiert werden. Die Carbonsäureester werden dann bevorzugt in flüssiger Form besonders bevorzugt bei 80-250°C mit einer Membranpumpe bei erhöhtem Druck, besonders bevorzugt von 50 - 250 bar, hinter die Zahnradpumpe dosiert. Alternativ können die Carbonsäureester auch in die Mischzone des Seitenextruders über ein Regelventil in den Schmelzestrom eingetragen werden.

In einer besonders bevorzugten Ausführungsform befindet sich hinter dem Seitenextruder und allen Additiv-Dosierstellen ein statischer Mischer, um eine gute Durchmischung aller Additive zu gewährleisten. Die Polycarbonat-Schmelze des Seitenextruders wird dann in den Polycarbonat-Hauptschmelzestrom eingetragen. Die Vermischung des Hauptschmelzestroms mit dem Schmelzestrom des Seitenextruders erfolgt über einen weiteren statischen Mischer.

Alternativ zur Flüssigdosierung können die Phosphine und die Carbonsäureester in Form eines Masterbatches (Konzentrat der Additive in Polycarbonat) oder in reiner, fester Form über den Trichter der Polycarbonataufgabe des Seitenextruders dosiert werden. Ein solches Masterbatch kann weitere Additive enthalten.

Alle Additive können auch nachträglich zum Beispiel durch Compoundierung in das granulierte Polycarbonat eingebracht werden.

Die Bestimmung der rheologischen Eigenschaften geschieht durch die Messung der Schmelzviskosität der erfindungsgemäßen Formmassen in Pa·s bei Temperaturen von 280°C bis 320°C in Abhängigkeit vom Schergefälle, das zwischen 50 und 5000 [1/s] variieren kann. Die Messung erfolgt nach ISO 11443 mit Hilfe eines Kapillarrheometers.

Die Bestimmung der optischen Eigenschaften der erfindungsgemäßen Formmassen geschieht durch Messung des sog. Yellowness-Index (YI) an Normprüfkörpern nach ASTM E313. Die Ergebnisse sind in Tabelle 1 und Tabelle 2 zusammengefasst.

Die Bestimmung der Hydrolysebeständigkeit der erfindungsgemäßen Formmassen geschieht durch einen sog. Kochtest in Wasser, wobei über einen Zeitraum von 250 h Normprüfkörper in reinem Wasser unter Rückfluß bei Normaldruck gelagert werden. Veränderungen der so gelagerten Formkörper werden visuell, sowie durch Messung der Kerbschlagzähigkeit nach ISO 180/1C und durch Messung der relativen Lösungsviskosität bestimmt. Die relative Lösungsviskosität eta rel wird bestimmt in Methylenchlorid (0,5 g Polycarbonat/l) bei 25°C in einem Ubbelohde Viskosimeter. Die Ergebnisse sind in Tabelle 3 zusammengefasst.

Die erfindungsgemäßen Formmassen können zur Herstellung von Formkörpern jeder Art verwendet werden.

Diese können beispielsweise durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien.

Beispiele der erfindungsgemäßen Formkörper sind Profile, Folien, Gehäuseteile jeder Art, z.B. für Haushaltsgeräte wie Saftpressen, Kaffeemaschinen, Mixer; für Büromaschinen wie Monitore, Drucker, Kopierer; für Platten, Rohre, Elektroinstallationskanäle, Fenster, Türen und Profile für den Bausektor, Innenausbau und Außenanwendungen; auf dem Gebiet der Elektrotechnik z.B. für Schalter und Stecker. Ferner können die erfindungsgemäßen Formkörper für Innenaus- und Bauteile von Schienenfahrzeugen, Schiffen, Flugzeugen, Bussen und anderen Kraftfahrzeugen sowie für Kfz-Karosserieteile verwendet werden.

Die erfindungsgemäßen Formkörper können transparent, translucent oder opak sein. Weitere Formkörper sind insbesondere optische und magnetooptische Datenspeicher wie Mini Disk, Compact Disk (CD) oder Digital Versatile Disk (DVD), Lebensmittel- und Getränkeverpackungen, optische Linsen und Prismen, Linsen für Beleuchtungszwecke, Autoscheinwerferlinsen, Verglasungen für Bau- und Kraftfahrzeuge, Verscheibungen anderer Art wie für Gewächshäuser, sogenannte Stegdoppelplatten oder Hohlkammerplatten.

### Beispiele

Die erfindungsgemäßen Compounds wurden auf einem Extruder ZE25/3 der Fa. Berstorff, Hannover, mit einem Durchsatz von 10 kg/Std. hergestellt. Die Gehäusetemperaturen betrugen 220 bis 260 °C. Die verschiedenen Additive wurden in Form einer Pulvermischung mit Polycarbonatpulver - 5 Gew% bezogen auf die Gesamteinwaage - zudosiert.

**PC 1** ist ein Polycarbonat ohne Additive auf Basis von Bisphenol A und DPC mit einer Schmelze-Volumenfließrate (MVR) von 12,5 cm³/10 min (300°C/1,2 kg). Multifunktionelle Verbindungen A : 343 ppm, B : 32 ppm, C : 18 ppm, D : 76 ppm.

**PC 2** ist ein Polycarbonat auf Basis von Bisphenol A mit 250 ppm Triphenylphosphin (TPP) und 100ppm Triisooctylphosphat (TOF) und einem MVR von 12,5 cm³/10 min (300°C/1,2 kg). Multifunktionelle Verbindungen A : 340 ppm, B : 39 ppm, C : 15 ppm, D : 129 ppm.

**PC 3** ist ein Polycarbonat ohne Additive auf Basis von Bisphenol A mit einem MVR von 19 cm³/10 min (300°C/1,2 kg). Multifunktionelle Verbindungen A, B, C und D unterhalb der Nachweisgrenze.

Tabelle 1 zeigt, dass Beispiel 1 keine Additive enthält, während Beispiele 2 und 3 keine Phosphoradditive enthalten. Beispiele 1 bis 3 dienen als Vergleichsbeispiele.

Beispiele 4 und 5 enthalten sowohl Phosphoradditive (Triphenylphosphin TPP und Triisooctylphosphat TOF) als auch aliphatische Carbonsäureester (Glycerinmonostearat (GMS) und sind erfindungsgemäß.

Die erfindungsgemäßen Beispiele 4 und 5 zeigen im Vergleich zu den nicht erfindungsgemäßen Beispielen 1 bis 3 verbesserte Fließfähigkeit, bestimmt anhand der gemessenen Schmelzviskositäten, und verbesserte optische Eigenschaften, durch den niedrigeren YI-Wert verdeutlicht.

Die in Tabelle 1 gezeigten erfindungsgemäßen Beispiele belegen damit die verbesserten optischen Eigenschaften und die verbesserte Fließfähigkeit im Vergleich zu den nicht erfindungsgemäßen Beispielen.

Tabelle 2 zeigt, dass Beispiel 6 keine Additive enthält. Beispiele 7 und 8 enthalten keine Phosphoradditive. Beispiele 6 bis 8 dienen als Vergleichsbeispiele.

Beispiele 9, 10 und II enthalten erfindungsgemäß sowohl Phosphoradditive (Triphenylphosphin TPP und Triisooctylphosphat TOF) als auch aliphatische Carbonsäureester (Pentaerythrittetrastearat PETS).

Die erfindungsgemäßen Beispiele 9 bis 11 zeigen im Vergleich zu den nicht erfindungsgemäßen Beispielen 6 bis 8 verbesserte Fließfähigkeit, bestimmt anhand der gemessenen Schmelzviskositäten, und verbesserte optische Eigenschaften, durch den niedrigeren YI-Wert verdeutlicht.

Die in Tabelle 2 gezeigten erfindungsgemäßen Beispiele belegen damit die verbesserten optischen Eigenschaften und die verbesserte Fließfähigkeit im Vergleich zu den nicht erfindungsgemäßen Beispielen.

Beispiel 12 in Tabelle 3 enthält Triphenylphosphin und Pentaerythrittetrastearat und ist damit erfindungsgemäß.

Beispiel 13 enthält Trialkylphosphit (Tris[(3-ethyl-3-oxetanyl)methyl] phosphit) und Pentaerythrittetrastearat und ist damit nicht erfindungsgemäß.

Das erfindungsgemäße Beispiel 12 aus Tabelle 3 zeigt im Gegensatz zum nicht erfindungsgemäßen Beispiel 13 eine wesentlich höhere Hydrolysebeständigkeit. Bei dem nicht erfindungsgemäßen Beispiel 13 tritt bereits nach 50 h Wasserlagerung ein dramatischer Abfall der Kerbschlagzähigkeit (Sprödbruch) und der Lösungsviskosität auf, während die erfindungsgemäßen Formkörper noch zäh brechen und nur eine marginale Minderung der Lösungsviskosität aufweisen. Nach 100 h wird bei dem nicht erfindungsgemäßen Beispiel 13 zusätzlich zum Abfall bei der Lösungsviskosität eine Trübung der gelagerten Formkörper durch sog. Flitterbildung beobachtet, wohingegen bei dem erfindungsgemäße Beispiel 12 erneut nur eine marginale Änderung der Lösungsviskosität und keine Veränderung des Aussehens beobachtet wird.

Das in Tabelle 3 gezeigte erfindungsgemäße Beispiel belegt damit die verbesserte Hydrolysestabilität im Vergleich zum nicht erfindungsgemäßen Beispiel.

**Tabelle 1: Glycerin-Monostearat (GMS) als aliphatischer Carbonsäureester**

| | | 1* | 2* | 3* | 4 | 5 |
|---|---|---|---|---|---|---|
| PC 1 | % | 95 | 95 | 95 | - | - |
| PC 2 | % | - | - | - | 95. | 95 |
| PC 3 | % | 5 | 4,6 | 4,2 | 4,6 | 4,2 |
| GMS | % | - | 0,4 | 0,8 | 0,4 | 0,8 |
| Schmelzeviskosität 300°C | | | | | | |
| 50 | Pas | - | 361 | - | - | - |
| 100 | Pas | 398 | 359 | - | 223 | - |
| 200 | Pas | 382 | 334 | - | 222 | - |
| 500 | Pas | 337 | 284 | 212 | 205 | 118 |
| 1000 | Pas | 283 | 240 | 201 | 182 | 112 |
| 1500 | Pas | 243 | 210 | 178 | 164 | 105 |
| 5000 | Pas | 126 | 117 | 111 | 99 | 72 |
| Schmelzeviskosität 320°C | | | | | | |
| 100 | Pas | - | 184 | - | - | - |
| 200 | Pas | 214 | 180 | - | 98 | - |
| 500 | Pas | 198 | 167 | 130 | 95 | 60 |
| 1000 | Pas | 175 | 148 | 126 | 89 | 58 |
| 1500 | Pas | 158 | 134 | 119 | 84 | 56 |
| 5000 | Pas | 95 | 90 | 81 | 61 | 44 |
| optische Daten in 4mm | | | | | | |
| Yellowness Index (YI) | | 2,12 | 2,21 | 2,09 | 2,05 | 1,89 |

| | | | | | | |
|---|---|---|---|---|---|---|
| *: Vergleichsbeispiel | | | | | | |

**Tabelle 2.: Pentaerythrit-tetrastearat (PETS) als aliphatischer Carbonsäureester**

| | | 6* | 7* | 8* | 9 | 10 | 11 |
|---|---|---|---|---|---|---|---|
| PC 1 | % | 95 | 95 | 95 | - | - | - |
| PC 2 | % | - | - | - | 95 | 95 | 95 |
| PC 3 | % | 5 | 4,8 | 4,6 | 4,8 | 4,6 | 4,2 |
| PETS | % | - | 0,2 | 0,4 | 0,2 | 0,4 | 0,8 |
| Schmelzeviskosität @ 300°C | | | | | | | |
| 50 | Pas | - | - | - | - | - | - |
| 100 | Pas | 367 | 394 | 388 | 360 | 352 | 332 |
| 200 | Pas | 357 | 378 | 371 | 347 | 337 | 327 |
| 500 | Pas | 334 | 334 | 326 | 310 | 303 | 291 |
| 1000 | Pas | 280 | 278 | 272 | 262 | 256 | 246 |
| 1500 | Pas | 242 | 238 | 233 | 227 | 220 | 213 |
| 5000 | Pas | 120 | 125 | 123 | 120 | 118 | 115 |
| Schmelzeviskosität @ 320°C | | | | | | | |
| 50 | Pas | - | - | - | - | - | - |
| 100 | Pas | - | - | - | - | - | - |
| 200 | Pas | 217 | 208 | 199 | 191 | 190 | 179 |
| 500 | Pas | 202 | 197 | 186 | 180 | 178 | 168 |
| 1000 | Pas | 180 | 177 | 168 | 162 | 161 | 152 |
| 1500 | Pas | 161 | 160 | 153 | 147 | 145 | 139 |
| 5000 | Pas | 96 | 96 | 93 | 90 | 89 | 86 |
| opt. Daten in 4mm | | | | | | | |
| Yellowness Index | | 2,39 | 2,09 | 1,96 | 1,92 | 1,86 | 1,85 |

| | | | | | | | |
|---|---|---|---|---|---|---|---|
| *: Vergleichsbeispiel | | | | | | | |

**Tabelle 3.: Hydrolysebeständigkeitstest**

| | | 12 * | 13 * |
|---|---|---|---|
| PC 1 | % | 95 | 95 |
| PC 3 | % | 4,55 | 4,55 |
| Pentaerythrittetrastearat (PETS) | % | 0,4 | 0,4 |
| Triphenylphosphin (TPP) | % | 0,05 | - |
| Tris[(3-ethyl-3-oxetanyl)methyl] phosphit | % | - | 0,05 |
| | | | |
| Hydrolysebeständigkeit | | | |
| eta rel PK | | 1,281 | 1,278 |
| Kerbschlaqzähiqkeit ISO 180/1C | kJ/m² | 8 xn.g. | 8xn.g. |
| 50h Kochtest | | | |
| eta rel PK | | 1,275 | 1,211 |
| Kerbschlagzähigkeit ISO 180/1C | kJ/m² | 3x165s | 9x 66s |
| | | 5xn.g. | |
| Aussehen | | unverändert | unverändert |
| 100h Kochtest | | | |
| eta rel PK | | 1,276 | 1,17 |
| Aussehen | | unverändert | viele Flitter |
| 250h Kochtest | | | |
| eta rel PK | | 1,27 | 1,123 |
| Aussehen | | teilweise leichte Flitter | stark trüb mit vielen Flittern sehr spröde lässt sich leicht durchbrechen |

| | | | |
|---|---|---|---|
| *: Vergleichsbeispiel n.g. = nicht gebrochen s = spröde | | | |

## Patentansprüche

1. Zusammensetzung, enthaltend ein Schmelzepolycarbonat, wenigstens ein Phosphin der Formel (I), wenigstens ein Alkylphosphat und wenigstens einen aliphatischen Carbonsäureester der allgemeinen Formel (III) sind: 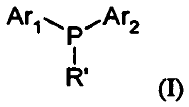 wobei Ar₁ und Ar₂ gleiche oder unterschiedliche unsubstituierte oder substituierte Arylreste sind und
R' ein unsubstituierter oder substituierter Arylrest oder einer der folgenden Reste (Ia) bis (Ih) ist 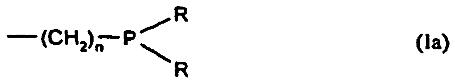 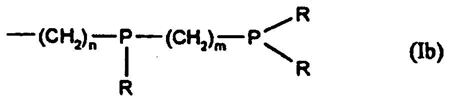 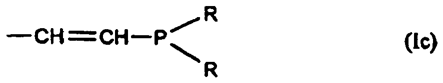 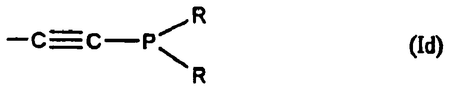 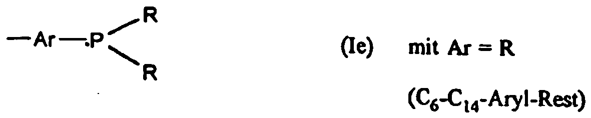 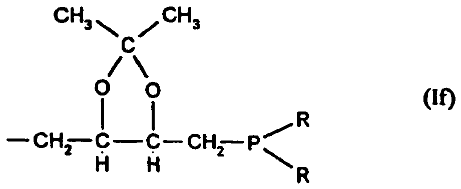 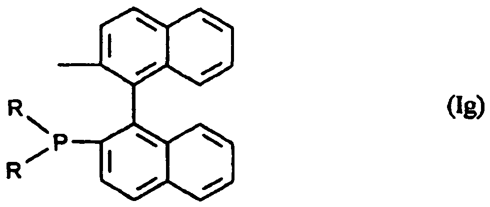 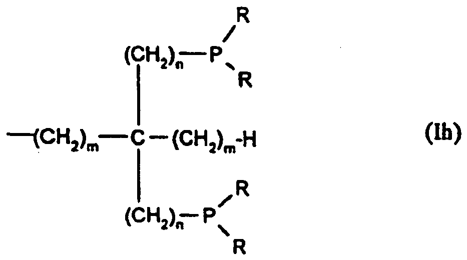 in denen R ein unsubstituierter oder substituierter C₆-C₁₄-Aryl-Rest ist und "n" und "m" jeweils unabhängig voneinander eine ganze Zahl von 1 bis 7 sind und wobei die H-Atome der Reste (Ia) bis (Ic) noch durch Substituenten ersetzt sein können und wobei
R' noch 4-Phenyl-phenyl oder α-Naphthyl sein kann, wenn beide Ar's in Formel (I) jeweils ebenfalls 4-Phenyl-phenyl oder α-Naphthyl sind. Hierbei können die 4-Phenyl-phenyl- und die α-Naphthyl-Reste noch Substituenten tragen
und
(R₄-CO-O)ₒ-R₅-(OH)ₚ, mit o = 1 bis 4 und p = 3 bis 0 (III)
wobei R₄ ein aliphatischer gesättigter oder ungesättigter, linearer, cyclischer oder verzweigter Alkylrest ist und R₅ ein Alkylenrest eines 1- bis 4-wertigen aliphatischen Alkohols R₅-(OH)ₒ₊ₚ ist.

2. Zusammensetzung gemäß Anspruch 1, enthaltend ein Schmelzepolycarbonat der Formel (IV) 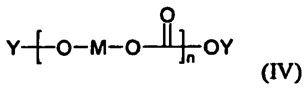 wobei die eckige Klammer sich wiederholende Struktureinheiten bezeichnet,
wobei Y = H oder eine Verbindung der Formel (X) 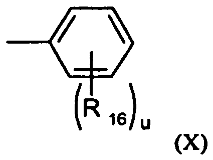 ist, wobei
R₁₆ gleich oder verschieden H, C₁ bis C₂₀-Alkyl, C₆H₅ oder C(CH₃)₂C₆H₅, und
u 0, 1, 2 oder 3 sein kann,
wobei M gleich Ar oder eine multifunktionelle Verbindung A, B, C sowie Verbindung D ist,
wobei Ar eine Verbindung sein kann, die durch Formel (VIII) oder (IX) dargestellt wird, 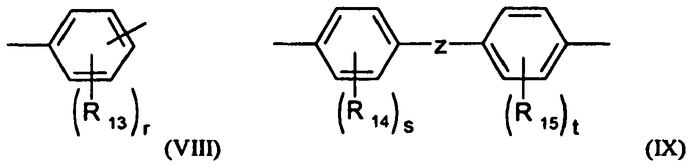 wobei
Z C₁ bis C₈-Alkyliden oder C₅ bis C₁₂-Cycloalkyliden, S, SO₂ oder eine Einfachbindung,
R₁₃, R₁₄, R₁₅ unabhängig voneinander ein substituiertes oder unsubstituiertes C₁-C₁₈-Alkylrest ist, bevorzugt ein substituiertes oder unsubstituiertes Phenyl, Methyl, Propyl, Ethyl, Butyl, Cl oder Br ist und n für 0, 1 oder 2 steht,
r, s, t unabhängig voneinander 0, 1 oder 2 sein kann,
wobei die multifunktionelle Verbindung A eine Verbindung der Formel 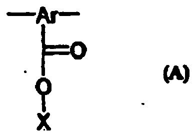 ist, wobei die multifunktionelle Verbindung B eine Verbindung der Formel 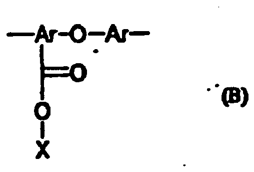 ist, wobei die multifunktionelle Verbindung C eine Verbindung der Formel 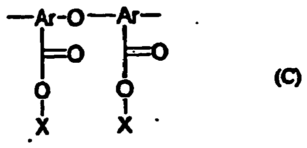 ist, wobei Verbindung D eine Verbindung der Formel 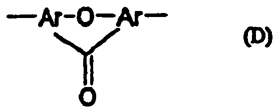 ist, und die Summe von multifunktionellen Verbindungen A, B, C und D ≥ 5 mg/kg ist,
wobei X = Y oder -[MOCOO]ₙ- Y ist,

3. Zusammensetzung nach einem der Ansprüche 1 oder 2, **dadurch gekennzeichnet, dass** die verwendeten Phosphine Verbindungen der Formel (I) sind oder deren oxidische Form oder eine Mischung daraus.

4. Zusammensetzung nach einem der Ansprüche 1 bis 3, **dadurch gekennzeichnet, dass** als Phosphin Triphenylphosphin eingesetzt wird oder dessen oxidische Form oder eine Mischung daraus.

5. Zusammensetzung nach Anspruch 3 oder 4 **dadurch gekennzeichnet, dass** bis zu 80 % der verwendeten Triarylphosphine in Form ihrer Oxide vorliegen.

6. Zusammensetzung nach einem der Ansprüche 1 bis 5, **dadurch gekennzeichnet, dass** die verwendeten Alkylphosphate Verbindungen der allgemeinen Formel (II) sind: 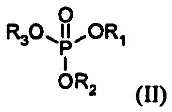 wobei R₁ bis R₃ H, gleiche oder unterschiedliche linerare, verzweigte oder zyklische Alkylreste sein können.

7. Zusammensetzung nach einem der Ansprüche 1 bis 6, **dadurch gekennzeichnet, dass** als Alkylphosphat wenigstens eines ausgewählt aus Mono-, Di- oder Triisooctylphosphat (Tri-2-ethylhexylphosphat) verwendet wird.

8. Zusammensetzung nach einem der Ansprüche 1 bis 7, **dadurch gekennzeichnet, dass** als Carbonsäureester Ester von Pentaerythrit, Glycerin, Trimethylolpropan, Propandiol, Stearylalkohol, Cetylalkohol oder Myristylalkohol mit Myristin-, Palmitin-, Stearin- oder Montansäure, und Gemische daraus, eingesetzt werden.

9. Zusammensetzung nach einem der Ansprüche 1 bis 8, **dadurch gekennzeichnet, dass** die verwendeten Phosphine in Mengen von 10 bis 2000 mg/kg bezogen auf das Gesamtgewicht der Zusammensetzung eingesetzt werden.

10. Zusammensetzung nach einem der Ansprüche 1 bis 9, **dadurch gekennzeichnet, dass** die verwendeten Alkylphosphate in Mengen von 0,5 bis 500 mg/kg bezogen auf das Gesamtgewicht der Zusammensetzung eingesetzt werden.

11. Zusammensetzung nach einem der Ansprüche 1 bis 10, **dadurch gekennzeichnet, dass** die verwendeten Carbonsäureester in Mengen von 50 bis 8000 mg/kg bezogen auf das Gesamtgewicht der Zusammensetzung eingesetzt werden.

12. Verfahren zur Herstellung von Polycarbonat-Zusammensetzungen gemäß einem der Ansprüche 1 bis 11, **dadurch gekennzeichnet, dass** das einzusetzende Polycarbonat durch Schmelzumesterungsreaktion von Bisphenolen und Kohlesäurediestern hergestellt wird.

13. Verfahren zur Herstellung von Polycarbonat-Zusammensetzungen gemäß einem der Ansprüche 1 bis 12, **dadurch gekennzeichnet, dass** das einzusetzende Polycarbonat durch Kondensation von Carbonatoligomeren, die Hydroxy- und / oder Carbonatendgruppen enthalten, und Bisphenolen sowie Kohlensäurediestern hergestellt werden.

14. Verfahren zur Herstellung von Polycarbonat-Zusammensetzungen gemäß einem der Ansprüche 1 bis 13, **dadurch gekennzeichnet, dass** die eingesetzten Additive dem Schmelzepolycarbonat-Schmelzestrom hinter der letzten Polykondensationsstufe über einen Seitenextruder zugeführt und anschließend gegebenenfalls in statischen Mischern vermischt werden.

15. Verfahren zur Herstellung von Polycarbonat-Zusammensetzungen gemäß einem der Ansprüche 1 bis 13, **dadurch gekennzeichnet, dass** die verwendeten Carbonsäureester hinter dem Seitenextruder und vor den statischen Mischer mit einer Membranpumpe oder einer anderen geeigneten Pumpe zudosiert werden.

16. Formkörper, enthaltend eine Zusammensetzung nach einem der Ansprüche 1 bis 11.

## Claims

1. Composition comprising a melt polycarbonate, at least one phosphine of the formula (I), at least one alkyl phosphate and at least one aliphatic carboxylic ester of the general formula (III): 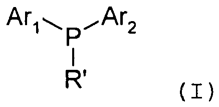 where Ar₁ and Ar₂ are identical or different unsubstituted or substituted aryl moieties and
R' is an unsubstituted or substituted aryl moiety or one of the following moieties (Ia) to (Ih) 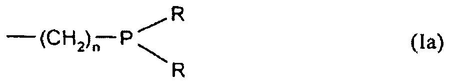 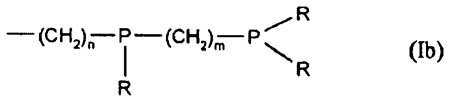 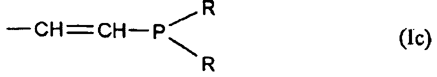 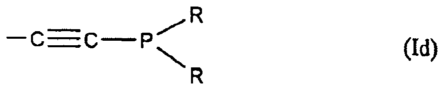 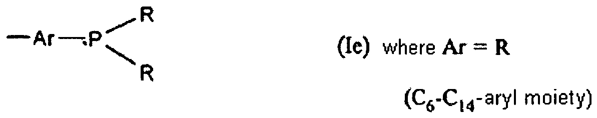 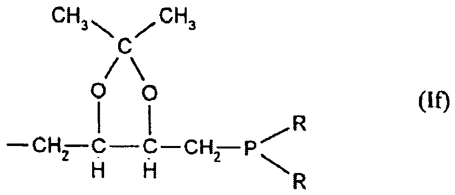 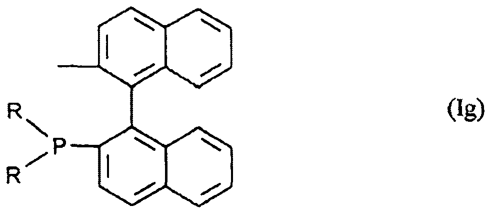 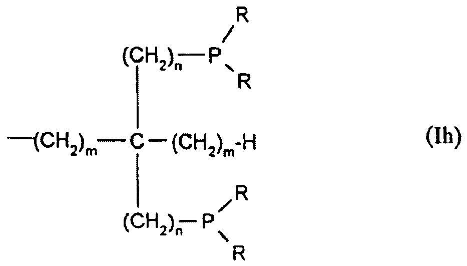 in which R is an unsubstituted or substituted C₆-C₁₄-aryl moiety and "n" and "m" respectively independently of one another are an integer from 1 to 7 and where the H atoms of the moieties (Ia) to (Ic) can also have been replaced by substituents and where
R' can also be 4-phenyl-phenyl or α-naphthyl, if both of the Ar moieties in formula (I) are respectively likewise 4-phenyl-phenyl or α-naphthyl. The 4-phenyl-phenyl moieties and the α-naphthyl moieties here can also bear substituents
and
(R₄-CO-O)ₒ-R₅-(OH)ₚ where o = 1 to 4 and p = 3 to 0 (III)
where R₄ is an aliphatic saturated or unsaturated, linear, cyclic or branched alkyl moiety and R₅ is an alkylene moiety of a mono- to tetrahydric aliphatic alcohol R₅-(OH)ₒ₊ₚ.

2. Composition according to Claim 1 comprising a melt polycarbonate of the formula (IV) 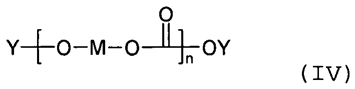 where the square bracket indicates repeating structural units,
where Y = H or a group of the formula (X) 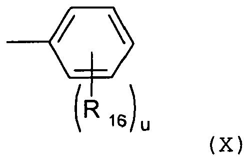 where R₁₆, identical or different, can be H, C₁ to C₂₀-alkyl, C₆H₅ or C(CH₃)₂C₆H₅, and
u can be 0, 1, 2 or 3,
where M is Ar or a polyfunctional group A, B, C, or else group D,
where Ar can be a group represented by formula (VIII) or (IX), 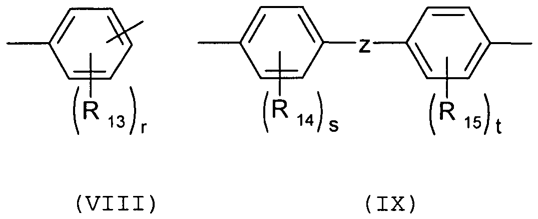 where
z is C₁ to C₈-alkylidene or C₅ to C₁₂-cycloalkylidene, S, SO₂ or a single bond,
R₁₃, R₁₄, R₁₅ is independently of the others a substituted or unsubstituted C₁-C₁₈-alkyl moiety, preferably substituted or unsubstituted phenyl, methyl, propyl, ethyl, butyl, Cl or Br and n is 0, 1 or 2,
r, s, t independently of one another can be 0, 1 or 2,
where the polyfunctional group A is a group of the formula 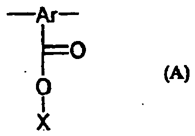 where the polyfunctional group B is a group of the formula 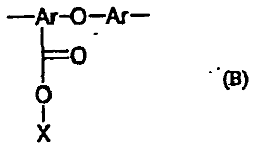 where the polyfunctional group C is a group of the formula 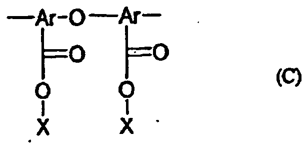 where group D is a group of the formula 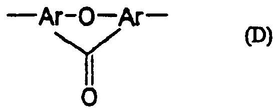 and the entirety of polyfunctional groups A, B, C and D is ≥ 5 mg/kg,
where X = Y or -[MOCOO]ₙ-Y.

3. Composition according to either of Claims 1 and 2, **characterized in that** the phosphines used are compounds of the formula (I) or the oxidic form of these or a mixture thereof.

4. Composition according to any of Claims 1 to 3, **characterized in that** the phosphine used comprises triphenylphosphine or the oxidic form of the same or a mixture thereof.

5. Composition according to Claim 3 or 4 **characterized in that** up to 80% of the triarylphosphines used are present in the form of the oxides of these.

6. Composition according to any of Claims 1 to 5, **characterized in that** the alkyl phosphates used are compounds of the general formula (II): 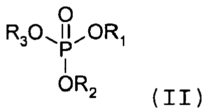 where R₁ to R₃ can be H, or identical or different linear, branched or cyclic alkyl moieties.

7. Composition according to any of Claims 1 to 6, **characterized in that** the alkyl phosphate used comprises at least one selected from mono-, di- or triisooctyl phosphate (tri-2-ethylhexyl phosphate).

8. Composition according to any of Claims 1 to 7, **characterized in that** the carboxylic ester used comprises esters of pentaerythritol, glycerol, trimethylolpropane, propanediol, stearyl alcohol, cetyl alcohol or myristyl alcohol with myristic, palmitic, stearic or montanic acid, and mixtures thereof.

9. Composition according to any of Claims 1 to 8, **characterized in that** the amounts used of the phosphines used are from 10 to 2000 mg/kg based on the total weight of the composition.

10. Composition according to any of Claims 1 to 9, **characterized in that** the amounts used of the alkyl phosphates used are from 0.5 to 500 mg/kg based on the total weight of the composition.

11. Composition according to any of Claims 1 to 10, **characterized in that** the amounts used of the carboxylic esters used are from 50 to 8000 mg/kg based on the total weight of the composition.

12. Process for producing polycarbonate compositions according to any of Claims 1 to 11, **characterized in that** the polycarbonate to be used is produced via a melt transesterification reaction of bisphenols and carbonic diesters.

13. Process for producing polycarbonate compositions according to any of Claims 1 to 12, **characterized in that** the polycarbonate to be used is obtained via condensation of carbonate oligomers containing hydroxy and/or carbonate end groups, and of bisphenols, and also carbonic diesters.

14. Process for producing polycarbonate compositions according to any of Claims 1 to 13, **characterized in that** the additives used are introduced by way of an ancillary extruder to the melt stream of the melt polycarbonate downstream of the final polycondensation stage and are then optionally mixed in static mixers.

15. Process for producing polycarbonate compositions according to any of Claims 1 to 13, **characterized in that** the carboxylic esters used are metered into the material downstream of the ancillary extruder and upstream of the static mixer with a membrane pump or any other suitable pump.

16. Moulding comprising a composition according to any of Claims 1 to 11.

## Revendications

1. Composition contenant un polycarbonate en masse fondue, au moins une phosphine de formule (I), au moins un phosphate d'alkyle et au moins un ester d'acide carboxylique aliphatique de formule générale (III) : 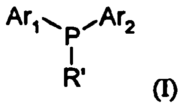 Ar₁ et Ar₂ représentant des radicaux aryle identiques ou différents, non substitués ou substitués et
R' représente un radical aryle non substitué ou substitué ou un des radicaux suivants (Ia) à (Ih) 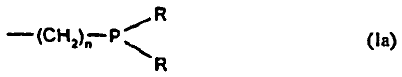 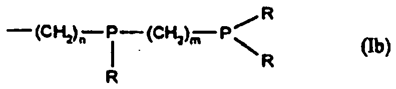 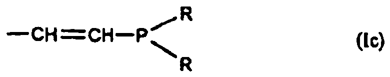 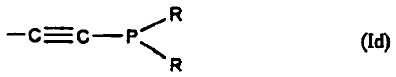 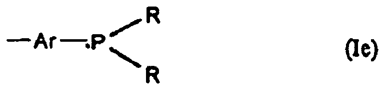 avec Aᵣ = R (radical C₆-C₁₄-aryle) 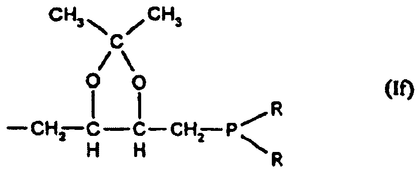 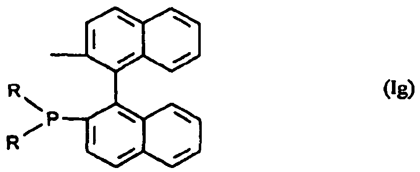 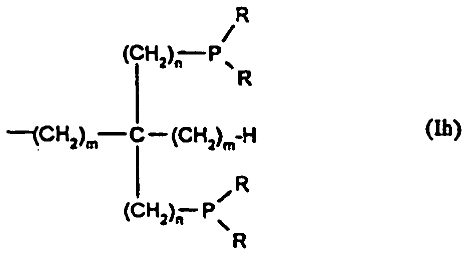 dans lesquels R représente un radical C₆-C₁₄-aryle non substitué ou substitué et "n" et "m" représentent, à chaque fois indépendamment l'un de l'autre, un nombre entier de 1 à 7 et les atomes de H des radicaux (Ia) à (Ic) pouvant encore être remplacés par des substituants et
R' ne pouvant représenter, ni 4-phénylphényle, ni α-naphtyle, lorsque les deux Ar dans la formule (I) représentent également 4-phénylphényle ou α-naphtyle, les radicaux 4-phénylphényle et α-naphtyle pouvant encore porter des substituants et
(R₄-CO-O)ₒ-R₅(OH)ₚ avec o = 1 à 4 et p = 3 à 0 (III)
R₄ représentant un radical alkyle aliphatique, saturé ou insaturé, linéaire, cyclique ou ramifié et R₅ représentant un radical alkylène d'un alcool aliphatique monovalent à tétravalent R₅-(OH)ₒ₊ₚ.

2. Composition selon la revendication 1, contenant un polycarbonate en masse fondue de formule (IV) 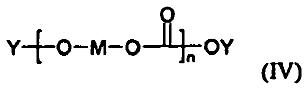 les crochets désignant des unités de structure récurrentes, Y = H ou un composé de formule (X) 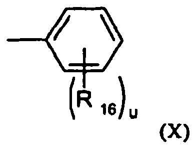 où
R₁₆ est identique ou différent et peut représenter H, C₁ à C₂₀-alkyle, C₆H₅ ou C(CH₃)₂C₆H₅, et
u peut valoir 0, 1, 2 ou 3,
M représentant Ar ou un composé multifonctionnel A, B, C ainsi qu'un composé D,
Ar pouvant être un composé représenté par la formule (VIII) ou (IX), 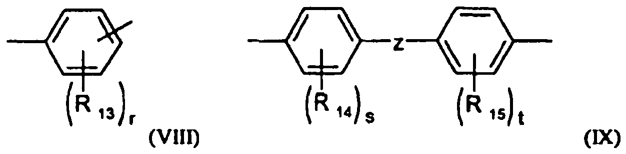
où
z eprésente C₁ à C₈-alkylidène ou C₅ à C₁₂-cycloalkylidène, S, SO₂ ou une simple liaison,
R₁₃ , R₁₄ , R₁₅ représentent, indépendamment l'un de l'autre, un radical C₁-C₁₈-alkyle substitué ou non substitué, de préférence un radical phényle, méthyle, propyle, éthyle, butyle, substitué ou non substitué, Cl ou Br et n vaut 0, 1 ou 2,
r, s, t indépendamment l'un de l'autre, peuvent valoir 0, 1 ou 2 ;
le composé multifonctionnel A représentant un composé de formule 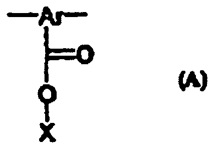 le composé multifonctionnel B représentant un composé de formule 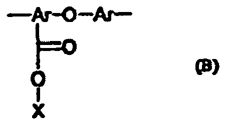 le composé multifonctionnel C représentant un composé de formule 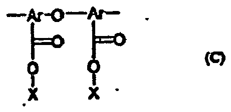 le composé D représentant un composé de formule 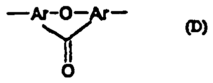 et la somme des composés multifonctionnels A, B, C et D étant ≥ 5 mg/kg, X = Y ou -[MOCOO]ₙ-Y.

3. Composition selon l'une quelconque des revendications 1 ou 2, **caractérisée en ce que** les phosphines utilisées sont des composés de formule (I) ou leur forme oxyde ou un mélange de ceux-ci.

4. Composition selon l'une quelconque des revendications 1 à 3, **caractérisée en ce qu'**on utilise, comme phosphine, la triphénylphosphine ou sa forme oxyde ou un mélange de celle-ci.

5. Composition selon la revendication 3 ou 4, **caractérisée en ce que** jusqu'à 80% des triarylphosphines utilisées se trouvent sous forme de leurs oxydes.

6. Composition selon l'une quelconque des revendications 1 à 5, **caractérisée en ce que** les phosphates d'alkyle utilisés sont des composés de formule générale (II) : 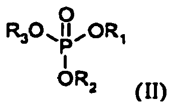 R₁ à R₃ pouvant représenter H, des radicaux alkyle identiques ou différents, linéaires, ramifiés ou cycliques.

7. Composition selon l'une quelconque des revendications 1 à 6, **caractérisée en ce qu'**on utilise, comme phosphate d'alkyle, au moins l'un choisi parmi le phosphate de mono-isooctyle, de diisooctyle ou de triisooctyle (phosphate de tri-2-éthylhexyle).

8. Composition selon l'une quelconque des revendications 1 à 7, **caractérisée en ce qu'**on utilise comme esters d'acides carboxyliques des esters de pentaérythritol, de glycérol, de triméthylolpropane, de propanediol, d'alcool stéarylique, d'alcool cétylique ou d'alcool myristylique avec de l'acide myristique, palmitique, stéarique ou de montane et leurs mélanges.

9. Composition selon l'une quelconque des revendications 1 à 8, **caractérisée en ce que** les phosphines utilisées sont utilisées en des quantités de 10 à 2000 mg/kg par rapport au poids total de la composition.

10. Composition selon l'une quelconque des revendications 1 à 9, **caractérisée en ce que** les phosphates d'alkyle utilisés sont utilisés en des quantités de 0,5 à 500 mg/kg par rapport au poids total de la composition.

11. Composition selon l'une quelconque des revendications 1 à 10, **caractérisée en ce que** les esters d'acides carboxyliques utilisés sont utilisés en des quantités de 50 à 8000 mg/kg par rapport au poids total de la composition.

12. Procédé pour la préparation de compositions de polycarbonate selon l'une quelconque des revendications 1 à 11, **caractérisé en ce que** le polycarbonate à utiliser est préparé par réaction de transestérification en masse fondue de bisphénols et de diesters de l'acide carbonique.

13. Procédé pour la préparation de compositions de polycarbonate selon l'une quelconque des revendications 1 à 12, **caractérisé en ce que** le polycarbonate à utiliser est préparé par condensation d'oligomères de carbonate, contenant des groupes terminaux hydroxy et/ou carbonate, et de bisphénols ainsi que de diesters de l'acide carbonique.

14. Procédé pour la préparation de compositions de polycarbonate selon l'une quelconque des revendications 1 à 13, **caractérisé en ce que** les additifs utilisés sont introduits dans le flux de masse fondue de polycarbonate en aval de la dernière étape de polycondensation via une extrudeuse latérale et ensuite le cas échéant mélangés dans des mélangeurs statiques.

15. Procédé pour la préparation de compositions de polycarbonate selon l'une quelconque des revendications 1 à 13, **caractérisé en ce que** les esters d'acides carboxyliques utilisés sont ajoutés en dosant en aval de l'extrudeuse latérale et en amont du mélangeur statique à l'aide d'une pompe à membrane ou d'une autre pompe appropriée.

16. Corps façonné contenant une composition selon l'une quelconque des revendications 1 à 11.
